# EUROPEAN PATENT APPLICATION

(11) **EP 1 035 736 A1**
(43) Date of publication of application: **13.09.2000**
(21) Application number: 00200796.1
(22) Date of filing: 07.03.2000
(51) Int. Cl.: H04N 7/26, H04N 5/14, H04N 7/14

(54) **Method and device for transmitting electronic image information**

(30) Priority: 12.03.1999 NL 1011542
(71) Applicant: Beheersmij Lamprei B.V., 1399 GK Muiderberg (NL)
(72) Inventor: Van Wijk, Roald Christiaan, 1274 PJ Huizen (NL)
(74) Representative: Van Breda, Jacobus

(57) **Abstract**

A method of transmitting electronic image data from a sender to a receiver in a message, wherein the image is divided into grids defined by horizontal and vertical image lines, and wherein a current image is compared with at least the immediately preceding image, and the message transmitted by the of sender to the receiver depends on the result of the comparison, wherein the comparison of successive images is carried out by comparing signal values in the vicinity of a plurality of predetermined intersections of the horizontal and vertical image lines, in that for each of these intersections a threshold value is determined, in that for each of the said intersections a difference value of successive signal values in the vicinity of the intersections is determined, and in that if the determined difference value of at least one intersection is greater than the respective threshold value, the message will be formed by the complete current image data, and in that no message will be transmitted if the determined difference value of all intersections is smaller than the respective threshold values.

## Description

The present invention relates to a method of transmitting electronic image data from a sender to a receiver in a message, wherein the image is divided into grids defined by horizontal and vertical image lines, and wherein a current image is compared with at least the immediately preceding image, and the message transmitted by the sender to the receiver depends on the result of the comparison.

US-A-4,013,828 discloses a method and device for the reduction of the bandwidth and/or the time required for transmitting an electronic image. To this end the image is sampled in image groups of a predetermined size and stored digitally in a first memory. If the pattern in the respective image group is not yet present in the memory, a code word is allocated that is also stored in the memory. The electronic image data is then, together with the code word, transmitted to a receiver where they are stored in a second memory, in order to reconstruct the original image data at the receiver's end. If an image pattern was already present in the first memory, only the previously allocated code word instead of the entire image data is transmitted to the receiver, on the basis of which the receiver reconstructs the respective image pattern.

US-A-4,724,483 discloses a device and method for compressing data, wherein image data is divided into grid lines. Each grid line is divided into multibit units and compared with the bit pattern of a preceding unit. The correspondence or non-correspondence of the bit pattern is stored in a memory. If their bit patterns are found to correspond, the respective locations in a grid memory are given an identical address that is used to obtain access to the memory in which the bit data is stored.

US-A-4,553,171 discloses a method for the digital display of a digital image based on a sequence of code words. The code words represent pixel blocks of an original image subdivided into uniform pixel blocks. Each of the pixel blocks has a unique code unless this is identical to one of the preceding scanned blocks. Identical groups art allocated similar codes. When a digital image is being displayed, the codes are read in succession and the corresponding pixel blocks are successively stored in memories controlling a printer that reproduces the image.

The method and device to which the invention relates, is used in practice to reproduce a live image from a camera on a computer screen located at some distance. This involves transmitting the data in digitized form, and transmitting as many images as possible via a network connection, for the optimization of the live image. In order to prevent the system being overloaded, compression techniques are used of the kind known from the above-mentioned literature. This may occasionally detract from the quality of the transmitted image. A problematic aspect of the known technology is that, despite the compression techniques used, the computer located at some distance and feeding the display unit, is subjected to a considerable load in order to be able to realize the display of the image on the connected computer screen.

The object of the invention is to provide a method and a device for transmitting electronic image data, by means of which the load on the receiving computer is reduced, so that said computer which is usually intended for numerous other tasks, will have a smaller load.

To this end the method according to the invention for transmitting electronic image data is characterized in that the comparison of successive images is carried out by comparing signal values in the vicinity of a plurality of predetermined intersections of the horizontal and vertical image lines, in that for each of these intersections a threshold value is determined, that for each of the said intersections a difference value of successive signal values in the vicinity of the intersections is determined, and in that if the determined difference value of at least one intersection is greater than the respective threshold value, the message will be formed by the complete current image data, and in that no message will be transmitted if the determined difference value of all intersections is smaller than the respective threshold values.

The device for transmitting electronic image data in a message and in which the invention is also embodied, is characterized by a digitizer for the conversion of analog image data into digital image data, a first memory part for storing current image data and a second memory part that is receivingly coupled with the first memory part for storing image data coming from the first memory part, a comparator for comparing current digital image data stored in the first memory part with preceding digital image data stored in the second memory part, and a logical circuit for controlling the message, which clears the current image data present in the first memory part for transmittal in the message when the logical circuit establishes that a difference signal exiting the comparator exceeds an adjustable threshold value.

According to the invention, successive images are compared on the basis of predetermined detection spots. Said detection spots are formed by placing an imaginary grid over the video image, which grid is determined by horizontal and vertical image lines. The number of spots depends on the chosen number of horizontal and vertical image lines. By enlarging the space between the horizontal and vertical image lines, the number of spots decreases, allowing a more rapid comparison of successive images. By reducing the space between the horizontal and vertical image lines, the number of spots increases, with the result that the criterion of sufficient difference between successive images in order to effect transmittal to the receiver, will be fulfilled more quickly.

In a further preferred embodiment the method according to the invention is characterized in that the message is formed by the complete image data, when at least a predetermined number of the difference values that are determined for the respective intersections have exceeded the threshold values pertaining to those intersections. In this manner the sensitivity to changes in the image, causing the transmittal of fresh image data to the receiver, can be adjusted as required. For that matter, by means of selective adjustment of the threshold value, it is possible to locally increase or decrease the sensitivity to changes in the image. For example, the sensitivity to changes in the image may be adjusted such as to be greater in the centre of the image than at the periphery, so that the transmittal of image data is determined mainly by the most relevant aspects of the image data.

Preferably the method is then implemented such that the vicinity of the intersections involved in the comparison, is adjustable.

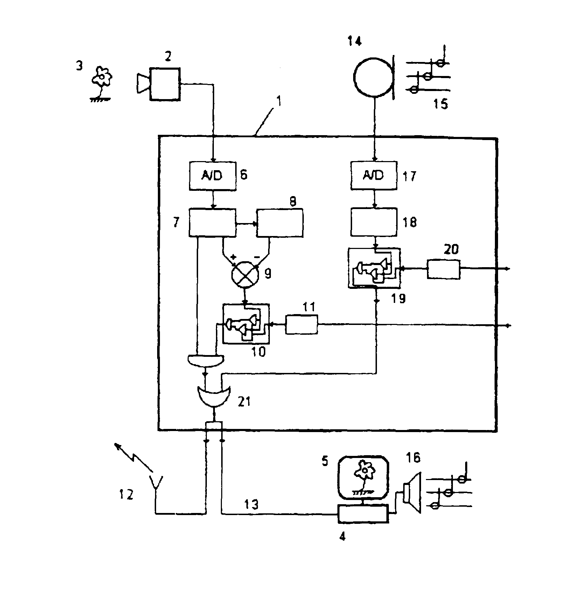

The invention will now be elucidated with reference to the drawing which, in a single figure schematically illustrates the device for transmitting electronic image data in a message in accordance with the invention.

This device is indicated in the figure by reference number 1. To the device 1, a camera 2 is coupled that records an image 3, which the device 1 transmits from the sender to the receiver 4, being the computer that displays said image on the display unit 5 coupled thereto. The device 1 comprises a digitizer 6 for the conversion of analog data from the camera 2 into digitized data that is stored in a first memory part 7. A second memory part 8 is coupled to the first memory part 7 for storing image data coming from the first memory part 7. Thus, this is image data immediately preceding the current image data stored in the first memory part 7. The image data in the first memory part 7 and the second memory part 8 are subsequently compared in a comparator 9, the comparator 9 emitting a difference signal to a logical circuit 10, which is also fed by an adjustment unit 11 for the adjustment of a threshold value with which the logical circuit 10 compares the difference signal coming from the comparator 9. If the difference signal emitted by comparator 9 remains below the threshold value, the logical circuit 10 will emit a logical 0 to inhibit the transmittal of the current image data present in the first memory part 7. If the difference signal from comparator 9 is greater than the said threshold value, the logical circuit 10 will emit a logical 1, thereby clearing the current image data present in the first memory part 7 for transmittal to the receiver 4 via, for example, the ether, via an aerial 12, or via a data channel 13, which receiver 4 will display the received digitized image data on the display unit 5.

It is also possible to connect a microphone 14 with the device 1 to register a sound sample 15 which the device 1 transmits from the sender to the receiver 4. The device 1 comprises a digitizer 17 for the conversion of analog data from the microphone 14 into digitized data that is stored in the memory part 18. The sound data in memory part 18 is compared in the logical circuit 19 with respect to a threshold value coming from adjusting element 20. If the sound signal coming from memory part 18 remains below the threshold value, the logical circuit 19 will emit a logical 0 to inhibit the transmittal of the current sound sample present in the memory part 18. If the difference signal is greater than the said threshold value, the logical circuit 19 will emit a logical 1, thereby clearing the sound sample present in the memory part 18 for transmittal, together with any possible image data coming from the first memory part 7 if the logical circuit 10 emits a logical 1, for example, via the ether (via aerial 12) or via the data channel 13 to the receiver 4 where subsequent to reconstruction, the received digitized sound sample is reproduced by the speaker 16, and the received digitized image data is reproduced on the display unit 5.

## Claims

1. A method of transmitting electronic image data from a sender to a receiver in a message, wherein the image is divided into grids defined by horizontal and vertical image lines, and wherein a current image is compared with at least the immediately preceding image, and the message transmitted by the sender to the receiver depends on the result of the comparison, **characterized** in that the comparison of successive images is carried out by comparing signal values in the vicinity of a plurality of predetermined intersections of the horizontal and vertical image lines, in that for each of these intersections a threshold value is determined, in that for each of the said intersections a difference value of successive signal values in the vicinity of the intersections is determined, and in that if the determined difference value of at least one intersection is greater than the respective threshold value, the message will be formed by the complete current image data, and in that no message will be transmitted if the determined difference value of all intersections is smaller than the respective threshold values.

2. A method according to claim 1, **characterized** in that the message is formed by the complete image data, when at least a predetermined number of the difference values that are determined for the respective intersections, have exceeded the threshold values pertaining to those intersections.

3. A method according to claim 1 or 2, **characterized** in that the vicinity of the intersections involved in the comparison, is adjustable.

4. A device (1) for transmitting electronic image data in a message, **characterized** by a digitizer (6) for the conversion of analog image data into digital image data, a first memory part (7) for storing current image data and a second memory part (8) that is receivingly coupled with the first memory part (7) for storing image data coming from the first memory part (7), a comparator (9) for comparing current digital image data stored in the first memory part (7) with preceding digital image data stored in the second memory part (8), and a logical circuit (10) for controlling the message, which clears the current image data present in the first memory part (7) for transmittal in the message when the logical circuit (10) establishes that a difference signal exiting the comparator (9) exceeds an adjustable threshold value.
